Europäisches Patentamt

European Patent Office

Office européen des brevets

Veröffentlichungsnummer: **0 283 875**
**A2**

## EUROPÄISCHE PATENTANMELDUNG

Anmeldenummer: 88103860.8

Int. Cl.⁴: **B62J 6/00**

Anmeldetag: 11.03.88

Priorität: 14.03.87 DE 8703886 U

Veröffentlichungstag der Anmeldung:
28.09.88 Patentblatt 88/39

Benannte Vertragsstaaten:
BE CH DE FR GB IT LI NL SE

Anmelder: **UNION Sils, van de Loo & Co.
GmbH
Ardeyer Strasse 13/15
D-5758 Fröndenberg(DE)**

Erfinder: **Bech, Hans, Dr.
Bonhoefferstrasse 2
D-5758 Fröndenberg/Ruhr(DE)**

Vertreter: **Patentanwaltsbüro Cohausz &
Florack
Postfach 14 01 47
D-4000 Düsseldorf 1(DE)**

Walzendynamo.

Die Erfindung betrifft einen Walzendynamo mit einem Außenläufer (1) für den Radmantel eines Fahrrades, wobei der Außenläufer um eine zur Läuferachse parallele Drehachse (8) verschwenkbar und durch eine an der Drehachse (8) befestigte - schraubenförmige Torsionsfeder (14) in Richtung des Radmantels beaufschlagt ist, wobei die Torsionsfeder (14) mit beiden Enden in voneinander getrennten Lagern (15, 16) befestigt ist, von denen ein Lager (16) drehverstellbar ist.

Fig. 1

EP 0 283 875 A2

## Walzendynamo

Die Erfindung betrifft einen Walzendynamo mit einem Außenläufer für den Radmantel eines Fahrrades, wobei der Außenläufer um eine zur Läuferachse parallele Drehachse verschwenkbar und durch eine an der Drehachse befestigte - schraubenförmige Torsionsfeder in Richtung des Radmantels beaufschlagt ist.

Bei Walzendynamos, wie auch bei üblichen Fahrradlichtmaschinen, wird der am Rad anliegende Walzenmantel mit einem Anpreßdruck gegen das Rad gerückt, der von einer Feder erzeugt wird. Dieser Anpreßdruck muß normalerweise so groß sein, daß auch bei widrigsten Witterungsverhältnissen ein Durchrutschen der Rolle oder der Walze verhindert wird. Dies führt aber dazu, daß insbesondere bei trocknem Wetter der Anpreßdruck zu groß ist und damit ein unnötiger Verschleiß entsteht und ferner der Benutzer des Fahrrades einen unnötig großen Kraftaufwand betreiben muß.

Aufgabe der Erfindung ist es, einen Walzendynamo so zu verbessern, daß unabhängig von der jeweiligen Witterung stets ein optimaler Anpreßdruck erzeugt wird.

Diese Aufgabe wird erfindungsgemäß dadurch gelöst, daß die Torsionsfeder mit beiden Enden in voneinander getrennten Lagern befestigt ist, von denen ein Lager drehverstellbar ist.

Bei diesem Walzendynamo kann die Größe des Anpreßdruckes durch Verändern der Federstärke erreicht werden. Dies ist von außen vom Benutzer leicht durchführbar, da das äußere Ende eines der beiden Lager leicht erreichbar ist. Der Benutzer kann somit den Dynamo den jeweiligen Verhältnissen und seinen persönlichen Wünschen anpassen.

Die Torsionsfeder hat vorteilhafterweise die doppelte Funktion, sowohl den Anpreßdruck auszuüben, als auch für das drehverstellbare Lager den Druck auszuüben, den das Lager in der nicht verdrehbaren Stellung hält und der überwunden werden muß, um es zu betätigen.

Eine besonders leicht herstellbare, sichere, kleinbauende und einfach bedienbare Einrichtung wird dann geschaffen, wenn das drehverstellbare Lager ein lösbares Festgesperre aufweist, das in zwei Drehrichtungen verstellbar ist. Hierzu wird insbesondere vorgeschlagen, daß das Festgesperre ein drehverstellbares Zahnrad aufweist, dessen Zähne an unbeweglichen Flächen, insbesondere an zahnförmigen Ausnehmungen, anliegen. Auch kann hierbei das verstellbare Teil des Festgesperres, insbesondere das Zahnrad, zwischen der festen und beweglichen Position axial verschieblich sein.

Vorzugsweise wird vorgeschlagen, daß das drehverstellbare Lager einen zylindrischen Teil aufweist, an dessen Rückseite die Feder befestigt ist und dessen Vorderseite das Festgesperre bildet. Auch können die Lager in beiden Enden einer zylindrischen Öffnung, insbesondere Bohrung einliegen, die die Feder zwischen den Lagern enthält.

Eine besonders einfache Bedienung bei kleiner Bauweise wird dann ermöglicht, wenn das drehverstellbare Lager eine Öffnung oder einen Vorsprung an der Außenseite aufweist, in die bzw. auf den ein Werkzeug zur Betätigung des Lagers anbringbar ist. Besonders vorteilhaft ist es, wenn das Teil eine Stirn-oder Kronenverzahnung aufweist. Hierbei kann die Stirn-oder Kronenverzahnung, den Boden einer koaxialen Ringnut bilden, in die ein entsprechendes Kronenrad des feststehenden Lagerteils hineinreicht. Ein Überdrehen wird dadurch verhindert, daß durch zwei Anschläge am Teil und Gegenanschläge am feststehenden Lagerteil das Teil begrenzt drehbeweglich ist. Hierbei kann das nicht drehverstellbare Lager einen koaxialen nach innen ragenden Vorsprung aufweisen, der wenige Millimeter vor dem drehverstellbaren Lagerteil endet und die axiale Beweglichkeit des drehverstellbaren Lagerteils begrenzt.

Ein Ausführungsbeispiel der Erfindung ist in den Zeichnungen dargestellt und wird im folgenden näher beschrieben. Es zeigen in einem ersten Ausführungsbeispiel

Figur 1 einen axialen Schnitt durch den Walzendynamo,

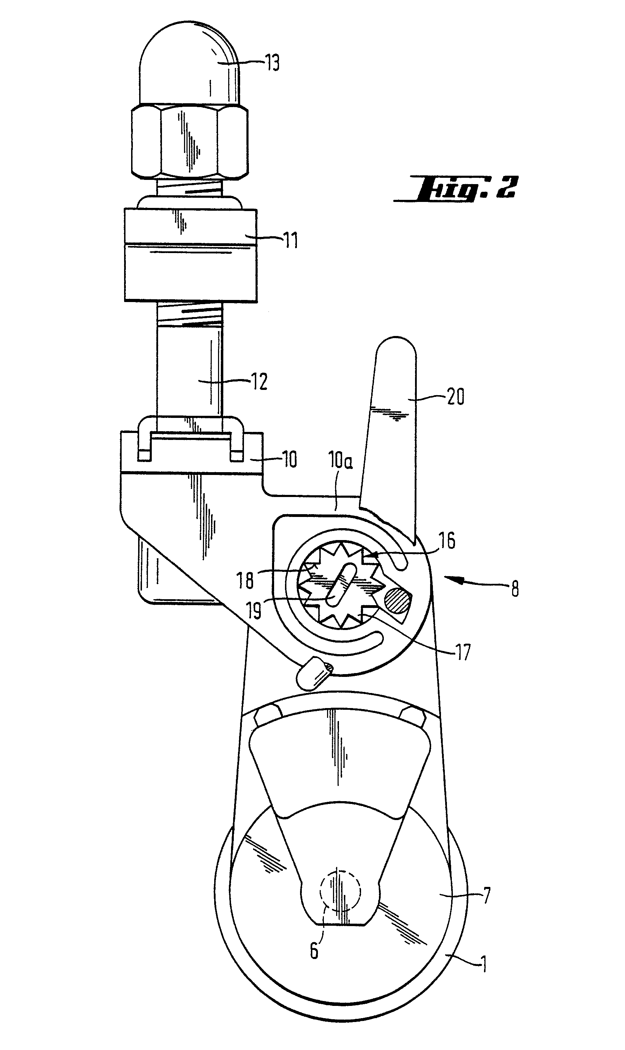

Figur 2 eine erste Seitenansicht des Walzendynamos nach Figur 1

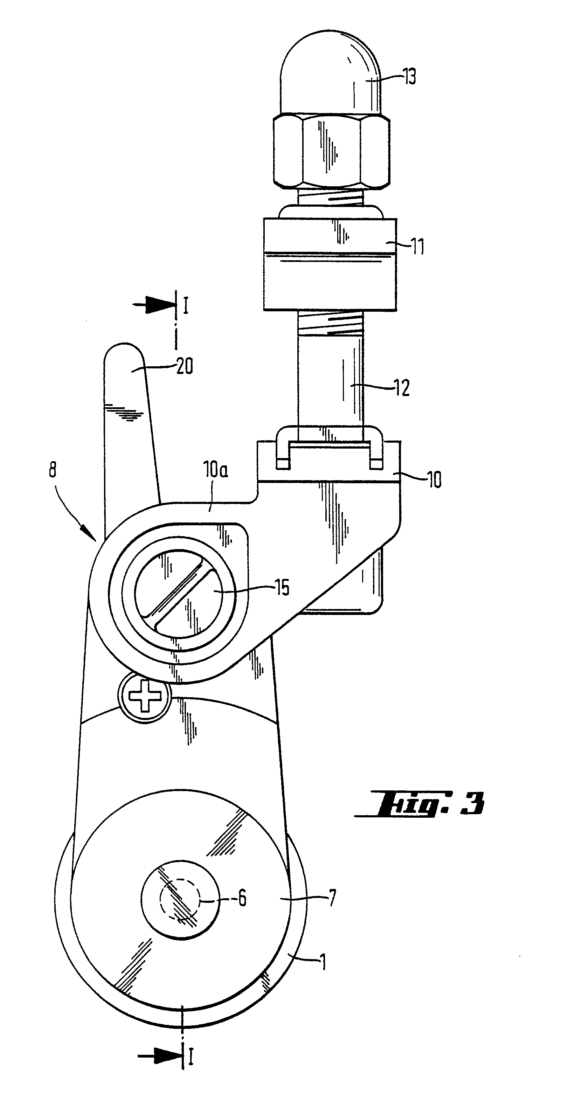

Figur 3 eine zweite Seitenansicht des Walzendynamos nach Figur 1

Figur 4 einen axialen Schnitt durch ein zweites Ausführungsbeispiel. Der Dynamo weist eine Walze 1 auf, die durch ein Kugellager 2 geführt ist und innerhalb der der Dynamo mit Magnet 3, Stator 4 und Spule 5 angeordnet ist. Die Walze 1 dreht sich um eine Statorachse 6, die zu beiden Seiten durch jeweils einen Gelenkarm gehalten.

Beide Gelenkarme 7 sind um eine Drehachse 8 angelenkt, so daß die Walze von Hand vom Radmantel anhebbar ist. Im angehobenen Zustand ist die Walze eingerastet gehalten, um dann nach Betätigung des Auslösehebels 20 wieder nach unten zu sinken. Die Drehachse 8 weist eine durchgehende zylindrische Bohrung 9 auf, um die sich im inneren Bereich die Gelenkarme drehen und deren äußere Bereiche zu beiden Seiten von zylindrischen Teilen 10 a oder Armen des Gelenkbügels 10 gebildet werden, der am Fahrrad durch einen Befestigungsbügel 11, einen Bolzen 12 und eine Mutter 13 angeschraubt ist.

In der Bohrung 9 liegt mittig und koaxial eine schraubenförmige Torsionsfeder 14 ein, die auf einer Seite von einem drehfesten Lager 15 gehalten ist, das in der Bohrung 9 einliegt. Das andere Ende der Feder 14 ist an einem zweiten Lager 16 fest, das drehverstellbar ist und ein lösbares Festgesperre bildet. Das Lager 16 weist an seiner Außenseite ein Zahnrad 17 auf, das in einer Ausnehmung 18 einliegt, die in Form und Größe dem Zahnrad 17 entspricht, so daß das Zahnrad 17 beim Einliegen in der Ausnehmung 18 unverdrehbar fest ist. Das zweite Lager 16 kann gegen den Druck der Feder 14 nach innen verschoben werden, um dann innerhalb der Bohrung 9 verdreht zu werden. Hierbei wird dann die Torsionskraft der Feder verändert. Sobald der Axialdruck auf das Lager 16 beendet wird, rastet es wieder in die Ausnehmung 18 ein.

Zur Bedienung des Lagers 16 und damit der Torsionskraft der Feder 14 weist das Lager 16 mittig eine Ausnehmung oder Öffnung 19 auf, in die ein Steckschlüssel oder Schraubenzieher zur Bedienung einsteckbar ist.

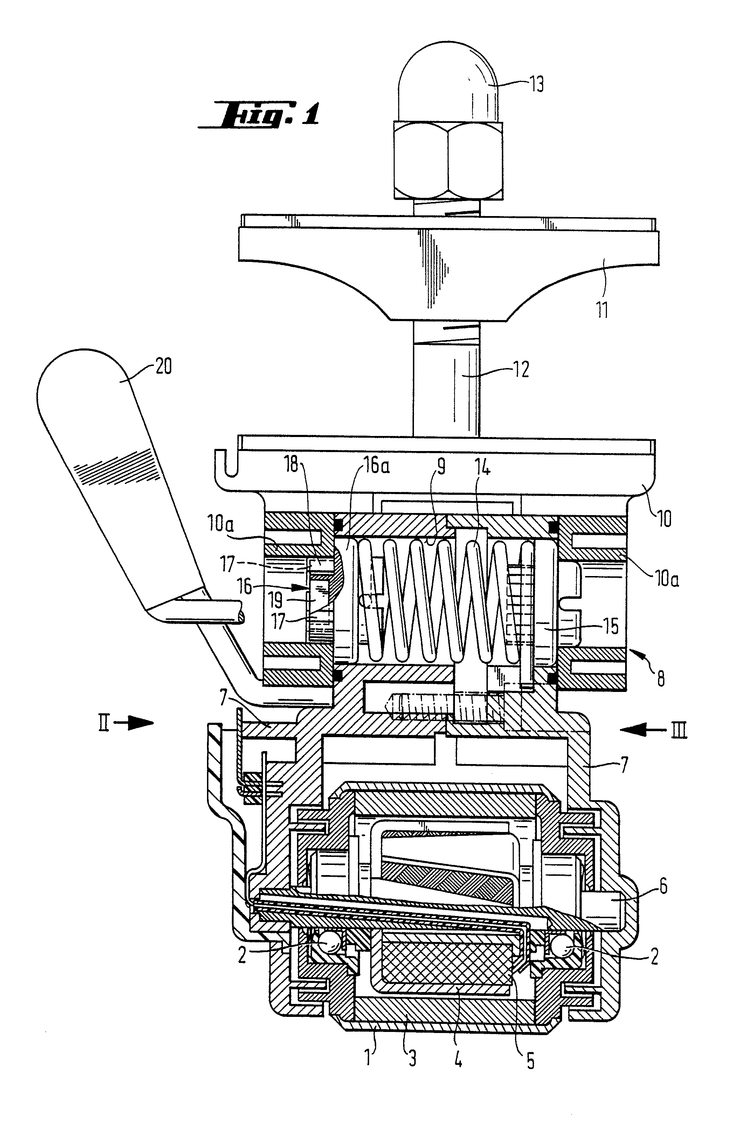

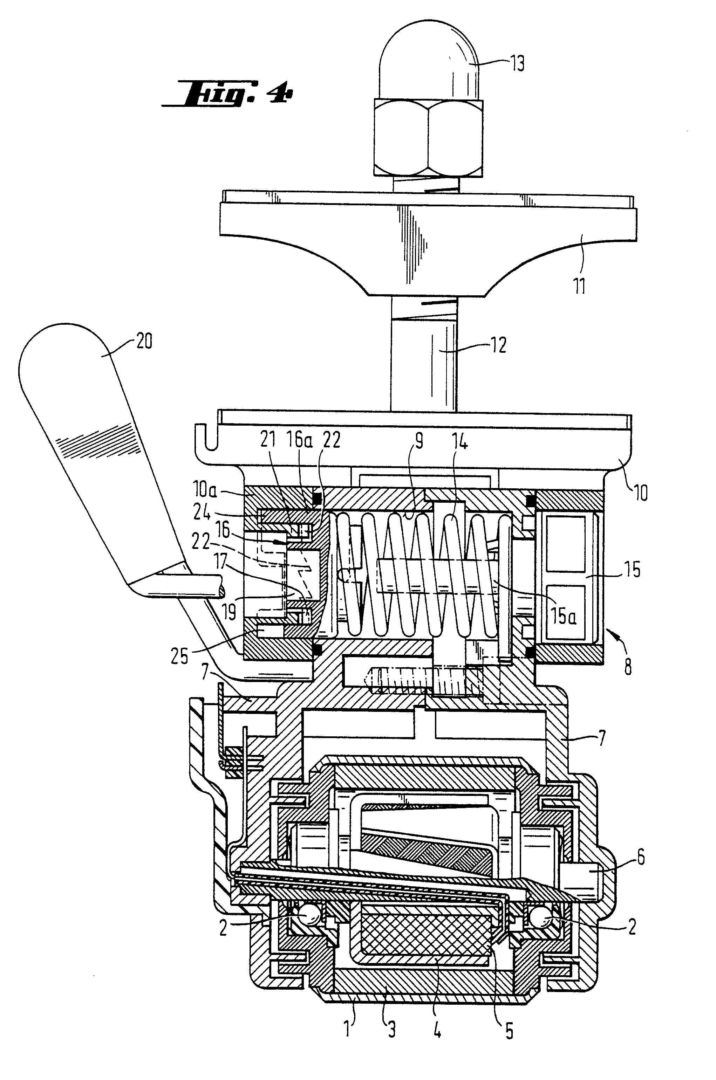

Bei dem drehverstellbaren Lager 16 ist das verdrehbare Teil 16 a rotationssymmetrisch insbesondere zylindrisch ausgeführt. Das Teil 16 a weist entweder entsprechend dem Ausführungsbeispiel in Figur 1 eine Stirnverzahnung auf, so daß es in einer entsprechenden kreisförmigen Ausnehmung mit Innenverzahnung des feststehenden Teils 10 a einliegt, oder aber das Teil 16 a weist eine Kronenradverzahnung 22 auf, die den Boden einer koaxialen Ringnut 23 bildet, Figur 4. In diese Ringnut 23 ragt ein Kronenrad 21 hinein, das am feststehenden Teil 10 a vorragt.

In beiden Ausführungsbeispielen kann der Grad der Drehverstellbarkeit des Teils 16 a begrenzt sein. Hierzu sind Anschläge am Teil 16 a une Gegenanschläge am Teil 10 a vorgesehen. Die Anschläge am Teil 16a sind vorzugsweise von dem Sektor eines vorstehenden, koaxialen Ringteils 24 gebildet, das in eine koaxiale Ringnut 25 des feststehenden Teils 10 a hineinragt. Hierbei springt der Boden der Ringnut 25 in einem Bereich vor, um die Gegenanschläge zu bilden.

Am nicht drehverstellbaren Lagerteil 15 steht nach innen koaxial ein Stift 15 a vor, der erst kurz vor dem Teil 16 a endet, so daß das Teil 16 a nur um wenige Millimeter nach innen drückbar ist, so daß zwar die Verzahnung außer Eingriff bringbar ist, aber Anschläge und Gegenanschläge der Teile 10 a und 16 a weiterhin in Eingriff bleiben.

## Ansprüche

1. Walzendynamo mit einem Außenläufer (1) für den Radmantel eines Fahrrades, wobei der Außenläufer um eine zur Läuferachse parallele Drehachse (8) verschwenkbar und durch eine an der Drehachse (8) befestigte schraubenförmige Torsionsfeder (14) in Richtung des Radmantels beaufschlagt ist, **dadurch gekennzeichnet,** daß die Torsionsfeder (14) mit beiden Enden in voneinander getrennten Lagern (15, 16) befestigt ist, von denen ein Lager (16) drehverstellbar ist.

2. Walzendynamo nach Anspruch 1, **dadurch gekennzeichnet,** daß das drehverstellbare Lager (16) ein lösbares Festgesperre (17, 18) aufweist, das in zwei Drehrichtungen verstellbar ist.

3. Walzendynamo nach Anspruch 2, **dadurch gekennzeichnet,** daß das Festgesperre ein drehverstellbares Zahnrad (17) aufweist, dessen Zähne an unbeweglichen Flächen, insbesondere an zahnförmigen Ausnehmungen, anliegen.

4. Walzendynamo nach Anspruch 2 oder 3, **dadurch gekennzeichnet,** daß das verstellbare Teil des Festgesperres, insbesondere das Zahnrad (17), zwischen der festen und beweglichen Position axial verschieblich ist.

5. Walzendynamo nach einem der vorherigen Ansprüche, **dadurch gekennzeichnet,** daß das drehverstellbare Lager (16) ein rotationssymmetrisches insbesondere zylindrisches Teil (16a) aufweist, an dessen Rückseite die Feder (14) befestigt ist und dessen Vorderseite das Festgesperre bildet.

6. Walzendynamo nach einem der vorherigen Ansprüche, **dadurch gekennzeichnet,** daß die Lager (15, 16) in beiden Enden einer zylindrischen Öffnung, insbesondere Bohrung (9), einliegen, die die Feder (14) zwischen den Lagern enthält.

7. Walzendynamo nach einem der vorherigen Ansprüche, **dadurch gekennzeichnet,** daß das drehverstellbare Lager (16) eine Öffnung (19) oder einen Vorsprung an der Außenseite aufweist, in die bzw. auf den ein Werkzeug zur Betätigung des Lagers anbringbar ist.

8. Walzendynamo nach einem der Ansprüche 5 bis 7, **dadurch gekennzeichnet,** daß das Teil (16a) eine Stirn-oder Kronenverzahnung aufweist.

9. Walzendynamo nach Anspruch 8, **dadurch gekennzeichnet,** daß die Stirn-oder Kronenverzahnung (22) den Boden einer koaxialen Ringnut (23) bildet, in die ein entsprechendes Kronenrad (21) des feststehenden Lagerteils (10a) hineinreicht.

10. Walzendynamo nach einem der Ansprüche 5 bis 8,

**dadurch gekennzeichnet,** daß durch zwei Anschläge am Teil (16a) und Gegenanschläge am feststehenden Lagerteil (10a) das Teil (16a) begrenzt drehbeweglich ist.

11. Walzendynamo nach einem der vorherigen Ansprüche,

**dadurch gekennzeichnet,** daß das nicht drehverstellbare Lager (15) einen koaxialen nach innen ragenden Vorsprung aufweist, der wenige Millimeter vor dem drehverstellbaren Lagerteil (16a) endet und die axiale Beweglichkeit des drehverstellbaren Lagerteils (16a) begrenzt.

**Fig. 1**

*Fig. 2*

Fig. 3

*Fig. 4*